(19) Europäisches Patentamt
European Patent Office
Office européen des brevets

(11) **EP 2 892 171 B1**

(12) **FASCICULE DE BREVET EUROPEEN**

(45) Date de publication et mention de la délivrance du brevet:
**23.10.2019 Bulletin 2019/43**

(51) Int Cl.:
*H04J 14/02* *(2006.01)*    *H04L 27/26* *(2006.01)*
*H04L 27/36* *(2006.01)*

(21) Numéro de dépôt: **15150095.6**

(22) Date de dépôt: **05.01.2015**

(54) **Pré-distorsion d'un signal optique à sous-porteuses multiplexées en fréquence**

Vorverzerrung eines optischen Signals mit in Frequenz multiplexierten Hilfsträgern

Pre-distortion of an optical signal with frequency multiplexed sub-carriers

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.01.2014 FR 1450071**

(43) Date de publication de la demande:
**08.07.2015 Bulletin 2015/28**

(73) Titulaire: **Orange**
**75015 Paris (FR)**

(72) Inventeurs:
• **Song, Mengdi**
**22300 Lannion (FR)**
• **Pincemin, Erwan**
**22290 Gommenec'h (FR)**

(56) Documents cités:
FR-A1- 2 906 660    US-A1- 2007 206 954
US-A1- 2010 046 958    US-A1- 2012 141 134

• SUGIHARA T ET AL: "43 Gb/s DQPSK pre-equalization employing 6-bit, 43GS/s DAC integrated LSI for cascaded ROADM filtering", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 mars 2010 (2010-03-21), pages 1-3, XP031677222,
• UTO K ET AL: "An experimental study of nonlinear effects on 43 Gb/s electronic pre-equalized transmission", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 mars 2013 (2013-03-17), pages 1-3, XP032426712, ISBN: 978-1-4799-0457-0

**Description**

La présente invention concerne le domaine de la transmission de signaux optiques, et plus particulièrement le domaine de la transmission de signaux optiques à sous-porteuses multiplexées en fréquence.

Les systèmes de transmission optiques actuellement sur le marché recourent à la technologie dite de « multiplexage en longueurs d'onde » (« WDM » en anglais) permettant des débits de transmission de 10 Gbps, 40 Gbps, voire 100 Gbps, en utilisant la grille ITU 50 GHz, autrement dit où l'espacement entre deux canaux optiques WDM est de 50 GHz (ou 0.4 nm).

Les réseaux de transport optique longue distance ont progressivement adopté une architecture maillée, grâce à la mise en oeuvre de multiplexeurs à insertion/extraction optique de longueurs d'onde reconfigurable, encore appelés ROADM. Ces multiplexeurs ROADM permettent de router de manière transparente les canaux WDM sans avoir recours à de coûteuses opérations de régénération optique/électrique/optique (OEO).

Les articles "43 Gb/s DQPSK Pre-equalization employing 6-bit, 43GS/s DAC Integrated LSI for Cascaded ROADM Filtering" de Sugihara et al. (OFC/NFOEC, 21 mars 2010) et "An Expérimental Study of Nonlinear Effects on 43 Gb/s Electronic Pre-equalized Transmission" de Uto et al. (OFC/NFOEC, 17 mars 2013) décrivent l'utilisation de tels multiplexeurs ROADM pour le routage de canaux WDM.

Par ailleurs, toujours dans le domaine de la transmission de canaux WDM, on peut signaler la demande US 2007/0206954 (Fishman et al.) dans lequel une pré-distorsion de signal électrique est utilisée spécifiquement pour pré-compenser l'auto-modulation de phase (SPM) et la dispersion chromatique affectant un signal optique durant sa transmission dans une fibre optique.

En ce qui concerne le domaine de la transmission de signaux optiques mono-porteuses, on peut signaler la demande US 2010/046958 (Awadalla Ahmed et al.) qui met en avant un système de transmission d'un signal optique mono-porteuse, issu d'un signal électrique mono-porteuse, utilisant une pré-distorsion de signal électrique d'entrée afin d'augmenter la tolérance du signal optique à la dispersion chromatique durant sa transmission dans la fibre optique, cette solution étant jugée préférable à l'utilisation d'un multiplexage par sous-porteuse (SCM) considéré comme coûteux et moins tolérant en termes de bruit.

On peut également signaler la demande US 2012/0141134 (Hauske) qui concerne, pour sa part, un système de transmission d'un signal optique mono-porteuse, issu d'un signal électrique mono-porteuse, dans lequel un canal retour est utilisé pour pré-égaliser le signal électrique à transmettre, avant sa conversion optique, afin d'améliorer la tolérance de formats de modulation d'ordre supérieur aux distorsions linéaires et non-linéaires de canaux.

FR 2906660 A1 concerne un procédé et dispositif de precorrection numérique d'un signal multi-canal.

Avec la montée en débit et l'apparition de « super-canaux » à 400 Gbps et 1 Tbps, il devient possible de désagréger optiquement les sous-bandes optiques constitutives de ces « super-canaux». Du coup, une nouvelle technologie dite de « multiplexage en fréquences orthogonales » (OFDM en anglais) peut être employée, au sein même de ces sous-bandes constitutives, cette technologie OFDM étant plus robuste que la technologie WDM par rapport aux dispersions chromatique et modale de polarisation, offrant un spectre rectangulaire plus tolérant en termes de filtrage optique, tout en permettant en outre d'utiliser des modulations différentes selon les sous-porteuses.

Dans cette perspective, une nouvelle grille a donc été standardisée par l'ITU-T (norme G.694.1) afin d'offrir un cadre à la mise en oeuvre de ces « super-canaux ». Dans cette nouvelle grille, les sous-longueurs d'onde (au centre des sous-bandes optiques) doivent s'aligner sur une grille dont le pas est de 6.25 GHz, tandis que la granularité du slot spectral est de 12.5 GHz.

Il en découle que le routage optique des sous-bandes optiques constitutives de « super-canaux » nécessitera à l'avenir l'emploi de multiplexeurs ROADM plus sélectifs et plus étroits que ceux utilisés actuellement sur les systèmes de transmission WDM traditionnels, la fonction de transfert spectral de ces multiplexeurs optiques devant être la plus rectangulaire possible.

Or le caractère parfaitement rectangulaire de la fonction de transfert spectral étroite des filtres optiques, en particulier des multiplexeurs de sous-bande, ne peut être garanti. Du coup, la mise en cascade de plusieurs filtres ou multiplexeurs optiques de sous-bande, par exemple dans une cascade de multiplexeurs ROADM, altère nécessairement la forme initiale du spectre des sous-bandes OFDM constitutives d'un « super-canal » lors de la transmission de ce « super-canal » au travers de ces filtres.

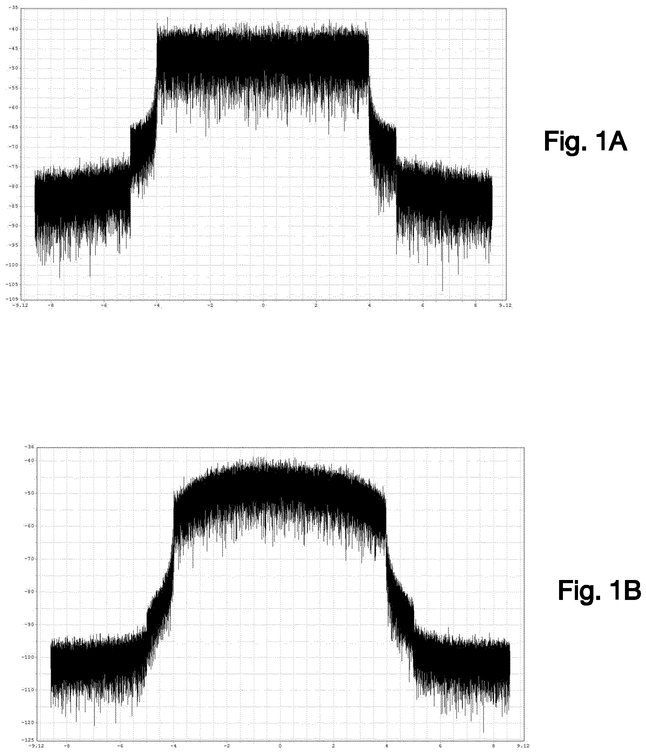

Les **figures 1A et 1B** illustrent ainsi la distorsion créée sur le spectre d'un signal optique OFDM de 8 GHz de bande passante, comprenant ici 256 sous-porteuses et apte à jouer le rôle d'une sous-bande optique constitutive d'un « super-canal » tel que discuté précédemment, ces figures illustrant le spectre de ce signal OFDM respectivement avant et après une cascade de 5 filtres optiques sélectifs extracteurs de sous-bandes.

On peut observer que, alors que le spectre initial est sensiblement plat en figure 1A, la différence de puissance entre les sous-porteuses de milieu de spectre et celles du bord de spectre est d'environ de 10 dB après la traversée des filtres optiques, en figure 1B.

La performance en réception d'un tel signal optique OFDM s'en trouve fortement dégradée, dans la mesure où les différentes sous-porteuses constitutives de ce signal OFDM présentent alors des taux d'erreur (BER en anglais) extrêmement variables, le rapport signal à bruit (SNR en anglais) entre ces différentes sous-porteuses n'étant plus du tout le même au niveau du récepteur de ce signal OFDM.

La présente invention vise à améliorer cette situation en remédiant à cet inconvénient.

Elle propose à cet effet un procédé de pré-distorsion d'un signal optique, destiné à être transmis sur une ligne de transmission optique et comprenant une pluralité de sous-porteuses optiques multiplexées en fréquence, ce signal optique étant obtenu à partir de la conversion optique d'un signal électrique comprenant une pluralité de sous-porteuses électriques multiplexées en fréquences, ce procédé comprenant les étapes suivantes :

obtention d'une pluralité de facteurs correctifs, correspondant aux sous-porteuses électriques, en fonction d'une pluralité de valeurs, déterminées pour les sous-porteuses optiques, d'un premier paramètre dépendant de la puissance de ces sous-porteuses ; et
application des facteurs correctifs sur les amplitudes des sous-porteuses électriques correspondantes, de sorte à égaliser en sortie de la ligne de transmission optique les valeurs du premier paramètre pour les sous-porteuses du signal optique.

Grâce à l'utilisation de ces facteurs correctifs dans le domaine électrique, la pré-distorsion ainsi appliquée permet de compenser la déformation en puissance du spectre du signal multi-porteuses lors de sa transmission dans le domaine optique et donc de limiter l'impact sur un signal multi-porteuses de l'insertion de composants optiques tels que des multiplexeurs optiques ROADM dans une ligne de transmission optique.

Selon un mode de réalisation, le procédé comprend en outre une étape de configuration préalable au cours de laquelle les valeurs du premier paramètre sont mesurées en sortie de la ligne de transmission optique et les facteurs correctifs sont calculés en fonction des valeurs mesurées du premier paramètres avant d'être mémorisés, ce qui permet d'obtenir des facteurs correctifs spécifiquement adaptés à la ligne de transmission sur laquelle le signal optique est destiné à être transmis.

Selon un autre mode de réalisation, le procédé comprend en outre une étape de configuration préalable au cours de laquelle plusieurs ensembles de facteurs correctifs sont mémorisés en association avec plusieurs configurations possibles de ligne de transmission optique, l'ensemble de facteurs correctifs à appliquer étant obtenu en récupérant, parmi les ensembles mémorisés, un ensemble associé à une configuration correspondant à la configuration de la ligne de transmission optique, ce qui permet de configurer par avance les facteurs correctifs.

Dans un mode particulier de réalisation permettant de compenser précisément l'impact des composants de la ligne optique sur les taux d'erreurs binaires associés aux différentes sous-porteuses en sortie de cette ligne optique, le premier paramètre est le rapport signal à bruit d'une sous-porteuse optique. Dans ce mode de réalisation, le facteur correctif $\alpha_{A,i}$ correspondant à la i-ème sous-porteuse du signal électrique est avantageusement calculé de la façon suivante :

$$\alpha_{A,i} = \sqrt{\frac{1}{SNR_i} \cdot \frac{N}{\sum_{i=1}^{N}\left(\frac{1}{SNR_i}\right)}}$$

où $SNR_i$ est le rapport signal à bruit de la i-ème sous-porteuse optique en sortie de la ligne de transmission optique et N est le nombre de sous-porteuses du signal optique.

Dans un autre mode particulier de réalisation, le premier paramètre est la puissance d'une sous-porteuse optique, ce qui permet une compensation simplifiée de l'impact des composants de la ligne optique sur les taux d'erreurs binaires, sans avoir à mesurer les puissances de bruit particulières des sous-porteuses en sortie de ligne optique. Dans cet autre mode de réalisation, le facteur correctif $\alpha_{A,i}$ correspondant à la i-ème sous-porteuse du signal électrique est avantageusement calculé de la façon suivante :

$$\alpha_{A,i} = \sqrt{\frac{P_{SC,0}}{P_{SC,i}} \cdot \frac{N}{\sum_{i=1}^{N}\left(\frac{P_{SC,0}}{P_{SC,i}}\right)}}$$

où $P_{SC,0}$ est la puissance en sortie de la ligne de transmission optique d'une sous-porteuse de référence parmi les sous-porteuses du signal optique, $P_{SC,i}$ est la puissance en sortie de la ligne de transmission optique de la i-ème sous-

3

porteuse du signal optique et N est le nombre de sous-porteuses du signal optique.

L'invention vise également un dispositif de pré-distorsion d'un signal électrique comprenant une pluralité de sous-porteuses multiplexées en fréquences, destiné à être converti en un signal optique transmis sur une ligne de transmission optique et comprenant une pluralité de sous-porteuses optiques multiplexées en fréquence. Ce dispositif est remarquable en ce qu'il comprend des moyens de traitement configurés pour :

obtenir une pluralité de facteurs correctifs, correspondant aux sous-porteuses électriques, en fonction d'une pluralité de valeurs, déterminées pour les sous-porteuses optiques, d'un premier paramètre dépendant de la puissance de ces sous-porteuses ; et

appliquer les facteurs correctifs sur les amplitudes des sous-porteuses électriques correspondantes, de sorte à égaliser en sortie de ladite ligne de transmission optique les valeurs du premier paramètre pour les sous-porteuses du signal optique.

Ce dispositif comprend avantageusement des moyens de mémorisation aptes à stocker au moins un ensemble de facteurs correctifs, les moyens de traitement étant agencés pour accéder aux moyens de mémorisation afin de récupérer les facteurs correctifs à appliquer sur les amplitudes respectives des sous-porteuses du signal électrique, ce qui permet une configuration préalable de facteurs correctifs à appliquer, lors de la pré-distorsion dans le domaine électrique, avant que le dispositif de pré-distorsion ne soit installé en amont de la ligne de transmission optique dans laquelle le signal est destiné à être transmis.

L'invention vise aussi un émetteur optique pour l'émission sur une ligne de transmission optique d'un signal optique comprenant une pluralité de sous-porteuses optiques multiplexées en fréquence est proposé, cet émetteur comprenant le dispositif de pré-distorsion ci-avant et des moyens de conversion optique agencés pour convertir un signal électrique comprenant une pluralité de sous-porteuses électriques multiplexées en fréquences, généré par le dispositif de pré-distorsion, en un signal optique comprenant une pluralité de sous-porteuses optiques multiplexées en fréquence.

L'invention vise par ailleurs un système de transmission optique comprenant au moins un émetteur optique tel que susmentionné, apte à émettre un signal optique comprenant une pluralité de sous-porteuses optiques multiplexées en fréquence, une ligne de transmission optique dont l'entrée est connectée à la sortie dudit au moins un émetteur optique, cette ligne de transmission optique comprenant au moins un dispositif optique présentant une fonction de transfert spectral susceptible d'affecter le spectre dudit signal optique, et au moins un récepteur optique dont l'entrée est connectée à la sortie de la ligne de transmission optique. Le dispositif optique en question peut notamment être un multiplexeur de type ROADM dont la fonction de transfert spectral n'est pas parfaitement rectangulaire.

L'invention vise aussi un programme d'ordinateur comportant des instructions de code pour l'exécution des étapes du procédé de pré-distorsion ci-avant, lorsque ce programme est exécuté par un processeur. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur tel que décrit ci-avant.

Ce support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

D'autres caractéristiques et avantages de l'invention apparaîtront à la lecture dans la description détaillée ci-après de modes de réalisation particuliers, donnés à titre d'exemples non limitatifs, et des figures annexées dans lesquelles, outre les figures 1A et 1B déjà discutées :

- la figure 2 illustre un système de transmission optique dans lequel la présente invention peut être mise en oeuvre ;
- la figure 3 illustre un dispositif de pré-distorsion selon un mode de réalisation de la présente invention ; et
- la figure 4 illustre un procédé de pré-distorsion selon un mode de réalisation de la présente invention.

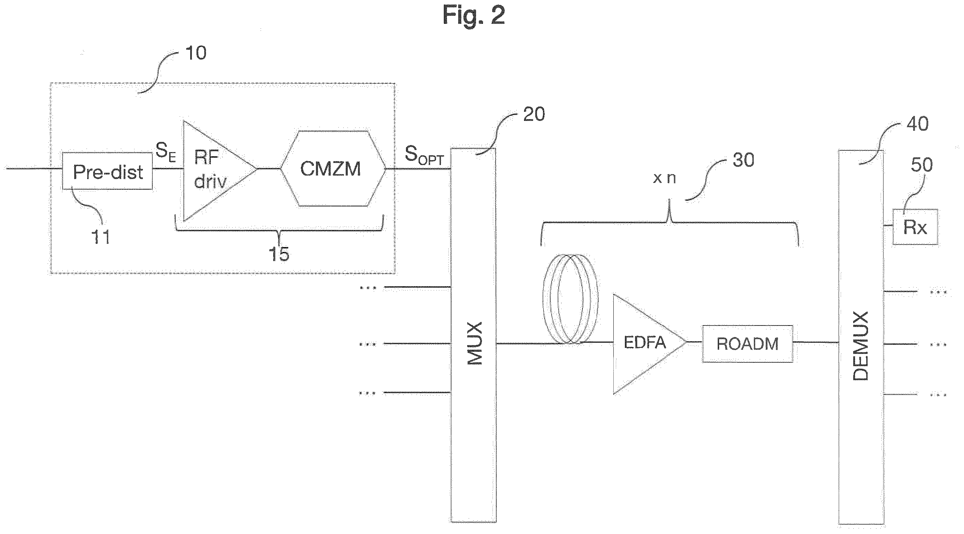

On se réfère tout d'abord à la **figure 2** sur laquelle est illustré un système de transmission optique dans lequel la présente invention peut être mise en oeuvre.

Ce système de transmission comprend des émetteurs optiques (un seul émetteur 10 étant illustré ici, de manière non limitative) connectés, par l'intermédiaire d'un multiplexeur optique de longueurs d'onde 20, à l'entrée d'une ligne de transmission optique 30. La sortie de cette ligne de transmission optique 30 est connectée à une pluralité de récepteurs optiques (un seul récepteur 50 étant illustré ici, de manière non limitative), par l'intermédiaire d'un démultiplexeur optique de longueurs d'onde 40.

Dans un tel système, chaque émetteur optique émet une sous-bande optique comprenant N sous-porteuses multiplexées en fréquences (N étant égal à $2^k$, k étant un entier, par exemple N=128, 256, 512, ...), et les différentes sous-bandes optiques sont multiplexées en longueurs d'onde afin de constituer un signal optique de type « super-canal » et sont ainsi transmises sur la ligne 30 avant d'être démultiplexées en longueurs d'ondes en sortie, pour être dirigées vers leurs récepteurs optiques respectifs.

La ligne de transmission optique 30 est typiquement constituée par l'alternance d'une fibre optique avec divers composants optiques présentant des fonctions de transfert spectral qui leur sont propres. La figure 2 illustre un cas particulier où cette ligne 30 comprend la répétition de n (n étant un entier tel que n≥1) ensembles similaires (« spans » en anglais) composés d'une fibre optique (par exemple de type SSMF) suivie par un amplificateur optique (par exemple de type EDFA) lui-même suivi par un multiplexeur à insertion/extraction optique de longueurs d'onde reconfigurable ROADM. En d'autres termes, la ligne de transmission 30 comprend n multiplexeurs ROADM en cascade, lesquels présentent une fonction de transfert spectral cumulée susceptible d'affecter fortement les performances d'un signal optique OFDM transitant sur cette ligne 30, du fait de l'imperfection du caractère rectangulaire des fonctions de transfert spectral de ces multiplexeurs.

L'émetteur optique 10 est, pour sa part, configuré pour émettre un signal optique OFDM, c'est-à-dire un signal optique (désigné par $S_{OPT}$) composé d'une pluralité N de sous-porteuses optiques multiplexées en fréquences, à partir d'un signal électrique $S_E$ lui-même composé d'un même nombre N de sous-porteuses électriques multiplexées en fréquences. Comme déjà indiqué, un tel signal optique OFDM peut notamment correspondre à une sous-bande optique constitutive d'un signal optique de type « super-canal » tel que décrit précédemment.

Plus précisément, l'émetteur 10 comprend des moyens de conversion électro-optique 15 capables de convertir le signal électrique $S_E$ en un signal optique $S_{OPT}$, ces moyens étant typiquement implémentés sous la forme d'un amplificateur électrique (« RF driver »), alimenté par le signal électrique $S_E$ de sorte à commander un modulateur optique (par exemple de type C-MZM) afin que ce dernier module un signal optique généré par une source optique (non illustrée). Les N sous-porteuses optiques du signal optique $S_{OPT}$ sont ainsi obtenues à partir de la conversion électro-optique des N sous-porteuses électriques du signal électrique $S_E$.

Afin de tenir compte de l'impact des dispositifs optiques présents sur la ligne 30, notamment des multiplexeurs de type ROADM, l'émetteur 10 comprend en outre un dispositif de pré-distorsion 11, sous la forme d'un module inséré en amont des moyens de conversion électro-optique 15, qui agit sur le signal électrique $S_E$ avant que celui-ci ne soit converti en un signal optique $S_{opt}$. En d'autres termes, le traitement du signal permettant de compenser les effets des multiplexeurs de type ROADM de la ligne 30 sur le signal optique est effectué dans le domaine électrique.

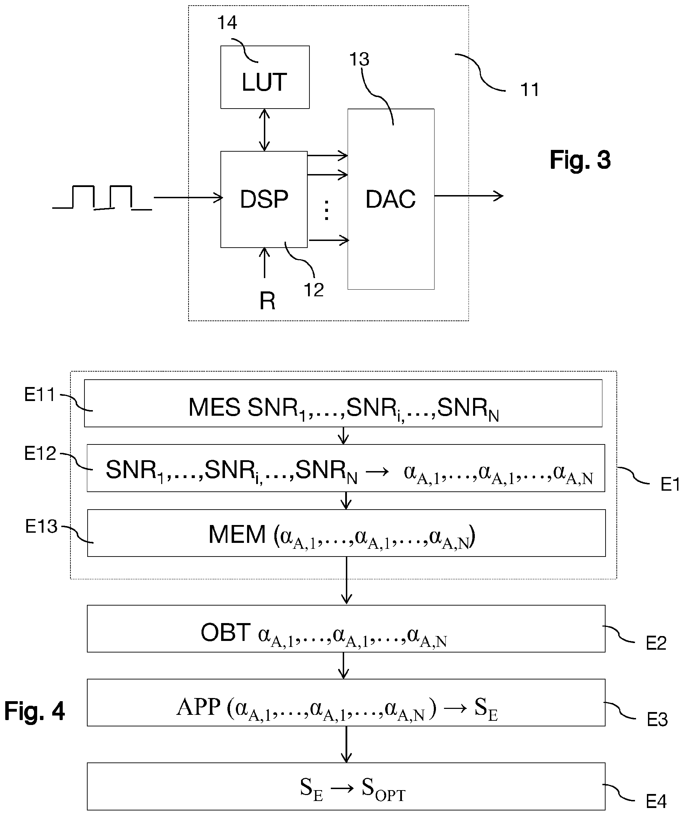

On se réfère maintenant à la **figure 3** qui illustre plus particulièrement un dispositif de pré-distorsion selon un mode de réalisation de la présente invention.

Ce dispositif de pré-distorsion 11 comporte des moyens de traitement 12, lesquels consistent typiquement en un processeur, implémenté par exemple sous la forme d'un module DSP. Ces moyens de traitement 12 génèrent, à partir de données utiles reçues en entrée, une pluralité de N sous-porteuses sous forme numérique et fournit ces sous-porteuses, en parallèle, à un convertisseur numérique-analogique 13, qui les convertit en un signal analogique destiné à être fourni aux moyens de conversion électro-optique 15 de l'émetteur optique 10.

Ces moyens de traitement 12 sont agencés en particulier pour appliquer, sur l'amplitude de chaque i-ème sous-porteuse électrique générée, un facteur correctif $\alpha_{A,i}$ propre à cette i-ème sous-porteuse. L'amplitude de la i-ème sous-porteuse électrique étant exprimée sous forme numérique, le facteur correctif $\alpha_{A,i}$ est également exprimé sous forme numérique.

En d'autres termes, alors qu'une puissance d'émission «nominale» $P_{S,SC}$, identique est utilisée habituellement pour les différentes sous-porteuses électriques générée d'un signal OFDM, l'amplitude de chaque sous-porteuse est multipliée ici par le facteur correctif $\alpha_{A,i}$ correspondant spécifiquement à cette sous-porteuse dans les moyens de traitement 12, de sorte à ce que le signal $S_E$ présente un spectre distordu (i.e. non plat) en sortie des moyens de traitement 12.

A ce titre, dans le dispositif 11, les moyens de traitement 12 peuvent être associés à une mémoire morte (non illustrée) constituant un support d'enregistrement, lisible par ces moyens de traitement sur lequel est enregistré un programme d'ordinateur conforme à l'invention, comportant des instructions pour l'exécution des étapes d'un procédé de pré-distorsion conforme à l'invention, ces étapes étant décrites ultérieurement en référence à la figure 4.

Outre les moyens de traitement 12 susmentionnés, le dispositif 11 comprend avantageusement des moyens de mémorisation 14, typiquement implémentés sous la forme d'une table de mémorisation (« look-up table » ou « LUT » en anglais), capables de stocker un certain nombre de facteurs correctif $\alpha_{A,i}$ pouvant être appliqués sur l'amplitude des sous-porteuses électriques par les moyens de traitement 12.

En particulier, une unique série de facteurs correctifs peut y être stockée, lorsque ces facteurs correctifs sont calculés à partir de mesures effectuées spécifiquement pour la ligne 30 considérée.

Alternativement, plusieurs séries de facteurs correctifs correspondant à différentes configurations possibles de ligne de transmission peuvent y être stockées au préalable, auquel cas les moyens de traitement 12 accèdent aux moyens de mémorisation 14 pour y vérifier s'il existe une série de facteurs correctifs $\alpha_{A,i}$ associée à une configuration de ligne correspondant (exactement ou dans une large mesure) à la configuration spécifique de la ligne 30 et, si c'est le cas, récupérer ces facteurs correctifs $\alpha_{A,i}$ afin de les appliquer sur les amplitudes respectives des sous-porteuses électriques auxquels ces facteurs correspondent.

On se réfère à présent à la **figure 4** qui illustre un procédé de pré-distorsion selon un mode de réalisation de la présente invention.

Dans ce procédé, le dispositif de pré-distorsion 11 est avantageusement configuré au préalable (étape E1), afin de permettre une mise en oeuvre ultérieure de la pré-distorsion proprement dite lorsque des données utiles sont à transmettre.

Au cours de cette étape E1 de configuration préalable, un certain nombre d'ensemble de N facteurs correctifs $\alpha_{A,i}$, destinés à être appliqués sur l'amplitude des N sous-porteuses électriques avant conversion optique, sont calculés de sorte à permettre l'égalisation, en sortie de la ligne de transmission optique 30, des valeurs $Q_i$ prises par un premier paramètre Q, dépendant de la puissance d'un signal, pour les différentes sous-porteuses optiques multiplexées.

Ce premier paramètre Q est typiquement le rapport signal à bruit (SNR en anglais), lequel reflète l'impact des fonctions de transfert spectral des dispositifs optiques aussi bien sur la puissance du signal optique que du bruit optique, auquel cas on cherche à égaliser les N valeurs $SNR_i$ de rapport signal à bruit spécifiques aux différentes sous-porteuses du signal $S_{OPT}$ en sortie de ligne 30, l'égalisation de ces paramètres permettant d'obtenir un meilleur taux d'erreur binaire.

En variante simplifiée, si l'on considère que la puissance de bruit est relativement homogène sur l'ensemble du spectre du signal optique $S_{OPT}$, ce premier paramètre Q est la puissance optique P, auquel cas on cherche à égaliser les N valeurs $P_i$ de puissance spécifiques aux différentes sous-porteuses du signal $S_{OPT}$ en sortie de ligne 30.

Comme déjà indiqué, une première variante de configuration préalable consiste, pour une ligne de transmission 30 donnée à l'entrée de laquelle un dispositif de pré-distorsion 11 est déjà installé, à mesurer (étape E11) les N valeurs de ce premier paramètre Q pour les différentes sous-porteuses à partir d'un signal optique OFDM transmis dans cette ligne 30, ce signal pouvant être un signal spécifique de test, voire un signal porteur de données utiles émis antérieurement, et à calculer (étape E12) chacun des N facteurs correctifs $\alpha_{A,i}$ à partir des N valeurs mesurées de ce premier paramètre Q. Une fois calculés, les facteurs correctifs $\alpha_{A,i}$ peuvent alors être mémorisés (étape E13), pour pouvoir être ensuite directement appliquées par les moyens de traitement 12 lors de la génération dans le domaine électrique du signal OFDM porteur de données utiles.

Une unique série de facteurs correctifs peut ainsi être stockée, notamment lorsque les signaux optiques émis par l'émetteur 10 empruntent la ligne de transmission 30 vers une unique destination, et donc traverse la même cascade de dispositifs optiques.

Alternativement, lorsque la ligne 30 à l'entrée de laquelle le dispositif 11 est installé comprend de multiples ramifications, et donc que les signaux optiques émis par l'émetteur 10 peuvent emprunter des chemins optiques présentant des cascades différentes de dispositifs optiques en fonction de la destination envisagée, il est possible stocker plusieurs séries de N facteurs correctifs, évalués pour chaque destination possible d'un signal optique émis par l'émetteur 10 et empruntant la ligne 30. Dans ce dernier cas, lorsqu'ils doivent générer un signal optique traversant la ligne 30 vers une destination particulière, les moyens de traitement 12 recherchent dans les moyens de mémorisation les facteurs correctifs $\alpha_{A,i}$ associés à cette destination spécifique.

Une deuxième variante de configuration préalable consiste à déterminer plusieurs ensembles de facteurs correctifs $\alpha_{A,i}$ correspondant à un certain nombre de configurations de ligne de transmission possibles (ces configurations pouvant être identifiées par une valeur d'un paramètre R qui leur est associée), et à stocker dans les moyens de mémorisation 14, pour chacune de ces configurations de ligne de transmission, les ensembles de facteurs correctifs ainsi déterminés, avantageusement en association avec la valeur du paramètre R caractérisant la configuration de ligne qui leur est associée.

Dans ce cas, l'étape E1 de configuration préalable comprend, pour une configuration de ligne spécifique :

- la détermination (étape E11), en sortie de la ligne de transmission optique dont la configuration est considérée, des valeurs du premier paramètre Q pour chacune des sous-porteuses optiques du signal $S_{OPT}$, typiquement suite à l'émission d'un signal optique OFDM de test dans cette ligne, en mesurant la valeur $Q_i$ de ce premier paramètre Q pour chaque i-ème sous-porteuse optique au moyen d'un analyseur de spectre optique ;
- le calcul (étape E12) des facteurs correctifs $\alpha_{A,i}$ associés respectivement à chacune de ces sous-porteuses optiques à partir des valeurs $Q_i$ déterminées du premier paramètre Q ; et
- la mémorisation (étape E13), dans les moyens de mémorisation 14 du dispositif de pré-distorsion 11, de ces facteurs correctifs $\alpha_{A,i}$, avantageusement en association avec une valeur spécifique de paramètre R identifiant cette configuration de ligne.

Ces opérations sont répétées un nombre M fois (M≥1) pour différentes configurations de ligne de transmission optique.

Cette dernière variante permet de préconfigurer le dispositif de pré-distorsion avant même son installation dans l'émetteur 10 en entrée de la ligne de transmission 30 (e.g. en usine), en y mémorisant un certain nombre de séries de N facteurs correctifs applicables pour des configurations possibles de ligne de transmission optique.

Les moyens de traitement 12 n'ont plus alors qu'à sélectionner, parmi les ensembles de N facteurs correctifs mémorisés, l'ensemble associé à une configuration de ligne de transmission optique correspondant, soit de manière strictement identique, soit d'une manière s'en approchant le plus, à la configuration spécifique de la ligne de transmission 30.

Pour illustrer ce dernier cas, on peut imaginer que dans une première approximation, parmi les différents dispositifs optiques présents sur la ligne de transmission considérée, il n'est tenu compte que des multiplexeurs ROADM présents dans cette ligne, ceux-ci étant considérés comme affectant le plus les spectre du signal optique $S_{OPT}$. En deuxième approximation, il peut être considéré que tous ces multiplexeurs ROADM présentent des fonctions de transfert spectral similaires.

Dans un tel cas, différentes séries de facteurs correctifs peuvent être calculées pour des lignes optiques présentant différents nombre de multiplexeurs ROADM, et le paramètre R caractérisant la configuration de ces lignes optiques peut simplement être le nombre de multiplexeurs ROADM présents dans ces lignes de transmission.

L'étape E1 de configuration préalable consiste alors à procéder à la mesure des valeurs $Q_i$ du premier paramètre Q sur une première ligne de transmission de test ne contenant qu'un seul multiplexeur ROADM (i.e. R=1) afin d'obtenir un premier ensemble de facteurs correctifs $\alpha_{A,i,R=1}$, puis à la mesure des valeurs $Q_i$ du premier paramètre Q avec une ligne de transmission de test comprenant deux multiplexeurs ROADM (i.e. R=2) afin d'obtenir un deuxième ensemble de valeurs de facteurs correctifs $\alpha_{A,i,R=2}$, et ainsi de suite jusqu'à un nombre M de multiplexeurs ROADM suffisant pour pouvoir couvrir toutes les configurations possibles de lignes de transmission optique utilisées en conditions réelles de transmission de données utiles.

Les différents ensembles de valeurs de facteurs correctifs $\alpha_{A,i}$ sont ainsi mémorisés, éventuellement en association avec la valeur de paramètre R identifiant la configuration de ligne employée pour calculer ces valeurs (en l'occurrence le nombre de multiplexeurs ROADM dans la ligne optique), dans les moyens de mémorisation 14 afin de pouvoir être récupérées ultérieurement par les moyens de traitement 12, comme dans l'exemple de table suivant :

| R | $\alpha_{A,1}$ | ... | $\alpha_{A,i}$ | ... | $\alpha_{A,N}$ |
|---|---|---|---|---|---|
| 1 | 1,05 | ... | 1 | ... | 1 |
| 2 | 1,1 | ... | 1,05 | ... | 1,02 |
| ... | ... | ... | ... | ... | ... |

Plus généralement, une configuration de ligne de transmission optique peut être caractérisée par les différentes quantités de L dispositifs optiques de types distincts présents dans cette ligne (L≥1), où chaque type distinct de dispositif présente une fonction de transfert spectral distincte susceptible d'affecter le spectre du signal optique $S_{OPT}$. Dans ce cas, les moyens de mémorisation 14 mémorise au préalable des séries de facteurs correctifs $\alpha_{A,i}$ calculés pour des configurations de ligne correspondants aux différentes combinaisons possibles de ces différentes quantités de dispositifs optiques (le paramètre R peut alors être un doublet, un triplet, etc. selon le nombre L de types distincts de dispositifs). Ceci permet aux moyens de traitement 12 de retrouver les facteurs correctifs à appliquer, lors de la transmission du signal sur la ligne de transmission 30, après avoir obtenu l'information sur les quantités de dispositifs optiques de différents types que cette ligne 30 contient.

Alternativement, ces séries de facteurs correctifs $\alpha_{A,i}$ peuvent être calculés pour différentes configurations de ligne correspondant à un type de dispositif optique spécifique (e.g. ROADM) associé à une distance variable séparant ce dispositif optique du dispositif le précédant dans la ligne considérée.

Les moyens de mémorisation 14 peuvent être renseignées avec des séries de facteurs correctifs correspondant à tout ou partie des variantes susmentionnées, les moyens de traitement 12 pouvant alors récupérer plusieurs séries de facteurs correctifs utilisables pour la ligne 30, selon différents critères, et calculer les facteurs correctifs $\alpha_{A,i}$ à appliquer à partir de ces facteurs correctifs (e.g. en les moyennant).

Une fois la configuration préalable du dispositif de pré-distorsion 11 effectuée, la pré-distorsion peut ensuite être appliquée dans un mode de fonctionnement nominal de l'émetteur optique 10, i.e. lorsque celui-ci doit émettre des signaux OFDM porteurs de données utiles.

Dans un tel mode de fonctionnement nominal, les moyens de traitement 12 accèdent (étape E2) aux moyens de mémorisation 14 pour récupérer les facteurs correctifs $\alpha_{A,i}$ à appliquer respectivement aux sous-porteuses électrique du signal $S_E$ à transmettre.

Dans le cas où plusieurs ensembles de N facteurs correctifs $\alpha_{A,i}$ sont stockés dans les moyens de mémorisation 14, les moyens de traitement 12 sélectionnent l'ensemble à récupérer correspondant le plus à la configuration de la ligne 30 dans laquelle le signal $S_E$ est à transmettre.

Ceci peut être fait par exemple en retrouvant, si elle a été renseignée, une valeur de paramètre R identifiant cette configuration, par exemple lorsque R identifie la destination des données dans une ligne 30 avec ramifications ou lorsque R identifie le nombre de multiplexeurs ROADM dans cette ligne 30) et en récupérant les N facteurs correctifs $\alpha_{A,i}$ associés à cette valeur dans les moyens de mémorisation 14). Dans ce cas, le paramètre R est obtenu préalablement par les moyens de traitement 12, par exemple sous la forme d'une information fournie au dispositif 11 par l'opérateur de la ligne de transmission 30, ou par détection automatique de ce paramètre.

Une fois muni de ces N facteurs correctifs $\alpha_{A,i}$, les moyens de traitement 12 appliquent (étape E3) ces facteurs aux amplitudes respectives des N sous-porteuses électriques correspondantes, lors de la génération des sous-porteuses dans le domaine électrique, avant que le signal électrique $S_E$ ainsi distordu ne soit fourni au convertisseur numérique-analogique 13, ce dernier fournissant le signal électrique, sous forme analogique cette fois, aux moyens de conversion électro-optiques 15 pour que ceux-ci convertissent (étape E4) le signal électrique en un signal optique $S_{OPT}$ émis vers la ligne 30.

Dans un mode de réalisation, le premier paramètre Q, dont les valeurs sont à égaliser pour les différentes sous-porteuses optiques en sortie de ligne 30, est le rapport signal sur bruit SNR en sortie de la ligne de transmission optique, de sorte à ce que les facteurs correctifs $\alpha_{A,i}$ servent à pré-distordre le spectre du signal OFDM à l'émission afin d'homogénéiser les valeurs particulières de rapport signal à bruit $SNR_i$ des différentes sous-porteuses OFDM en réception.

Les facteurs correctifs $\alpha_{A,i}$ sont alors calculés comme suit :

◦ Pour la i-ème sous-porteuse optique du signal $S_{OPT}$, le rapport signal sur bruit $SNR_i$ s'exprime de la façon suivante :

$$SNR_i = \frac{P_{SC,i}}{P_{n,i}}$$

où :

- $P_{SC,i}$ est la puissance de la i-ème sous-porteuse optique du signal $S_{OPT}$ en sortie de la ligne 30.
- $P_{n,i}$ est la puissance du bruit (principalement causé par l'émission spontanée amplifiée, dite « ASE », issue des amplificateurs optiques) affectant cette i-ème sous-porteuse optique, en sortie de cette ligne 30.
  On voit dans cette équation qu'aussi bien la puissance $P_{SC,i}$ de la i-ème sous-porteuse optique que la puissance de bruit $P_{n,i}$ l'affectant sont susceptibles d'être impactées par les fonctions de transfert spectral des dispositifs optiques présents sur la ligne 30.

◦ Il est alors possible d'exprimer (en puissance) le facteur correctif $\alpha_{P,i}$ à appliquer pour la i-ème sous-porteuse en fonction du rapport signal à bruit $SNR_i$ pour cette sous-porteuse :

$$\alpha_{P,i} = \frac{\beta}{SNR_i}$$

où $\beta$ est une constante de normalisation qu'il convient de définir comme suit.

Pour que la puissance totale du signal soit conservée lors de l'application de la pré-distorsion (sous peine d'avoir à modifier les paramètres de l'amplificateur électrique « RF driver » à chaque pré-distorsion), une première condition à remplir par les facteurs correctifs est la suivante :

$$\sum_{i=1}^{N} \left( \alpha_{P,i} . P_{SSC,i} \right) = P_{SSC,total}$$

où :

- $P_{SSC,i}$ est la puissance en émission de la i-ème sous-porteuse si aucune pré-distorsion n'est appliquée ;

- $P_{SSC,total}$ est la puissance totale en émission de l'ensemble des sous-porteuses si aucune pré-distorsion n'est appliquée.

Dans la mesure où la puissance en émission $P_{SSC,I}$ est identique pour toutes les sous-porteuses en l'absence de pré-distorsion, cette équation devient :

$$P_{SSC,1} \cdot \sum_{i=1}^{N} \alpha_{P,i} = P_{SSC,total}$$

D'où l'équation:

$$\sum_{i=1}^{N} \alpha_{P,i} = \sum_{i=1}^{N} \left( \frac{\beta}{SNR_i} \right) = N$$

Et:

$$\beta = \frac{N}{\sum_{i=1}^{N} \left( \frac{1}{SNR_i} \right)}$$

Ce qui permet d'obtenir le facteur correctif (en puissance) pour la i-ème sous-porteuse :

$$\alpha_{P,i} = \frac{1}{SNR_i} \cdot \frac{N}{\sum_{i=1}^{N} \left( \frac{1}{SNR_i} \right)}$$

Le facteur correctif $\alpha_{A,i}$ à appliquer, exprimé cette fois en amplitude, est alors obtenu en fonction des rapports signal à bruit des N sous-porteuses du signal optique $S_{OPT}$ au niveau du récepteur, selon l'équation (1) suivante :

$$(1) \qquad \alpha_{A,i} = \sqrt{\alpha_{P,i}} = \sqrt{\frac{1}{SNR_i} \cdot \frac{N}{\sum_{i=1}^{N} \left( \frac{1}{SNR_i} \right)}}$$

Pour obtenir ces facteurs correctifs $\alpha_{A,i}$ à appliquer, il suffit donc d'estimer au préalable les valeurs $SNR_i$ de rapport signal à bruit des N sous-porteuses du signal optique $S_{OPT}$ au niveau de la sortie de la ligne de transmission 30 ou d'une ligne de transmission de configuration similaire.

Dans un autre mode de réalisation où le premier paramètre Q est la puissance du signal, les facteurs correctifs sont calculés afin d'égaliser substantiellement les valeurs des puissances optiques $P_{SC,i}$ des sous-porteuses du signal $S_{OPT}$ en sortie de la ligne de transmission optique 30. En particulier, dans le cas où la densité spectrale de bruit d'ASE, généré par la chaine d'amplificateurs optiques présents sur la ligne 30, est quasi-homogène au niveau du récepteur 50 (i.e. les valeurs $P_{n,I},...,P_{n,i}$ sont sensiblement identiques), l'égalisation de ce type de paramètre donne de bonnes performances en termes de taux d'erreurs binaire, tout en étant plus simple à implémenter que l'égalisation des rapports signal à bruit.

Dans cette dernière hypothèse, afin de conserver la puissance totale du signal lors de l'application de la distorsion, le paramètre $SNR_i$ peut être avantageusement remplacé, dans la formule (1), par le rapport des puissances

$$\frac{P_{SC,i}}{P_{SC,0}}$$

où :

- $P_{SC,0}$ est la puissance en sortie de la ligne de transmission optique 30 d'une sous-porteuse de référence parmi les sous-porteuses du signal optique ;
- $P_{SC,i}$ est la puissance en sortie de la ligne de transmission optique de la i-ème sous-porteuse du signal optique.

La sous-porteuse de référence est avantageusement une sous-porteuse située au centre du spectre du signal optique $S_{OPT}$, afin de limiter au maximum les variations d'amplitude dues à la pré-distorsion pour les sous-porteuses situées au bord de ce spectre.

Ainsi, pour la i-ème sous-porteuse, le facteur correctif à appliquer est alors obtenu en remplaçant dans l'équation (1) précédente les paramètres $SNR_i$ de la manière indiquée ci-dessus, afin d'obtenir l'équation (2) suivante :

$$(2) \qquad \sqrt{\alpha_{P,i}} = \sqrt{\frac{P_{SC,0}}{P_{SC,i}} \cdot \frac{N}{\sum_{i=1}^{N}(\frac{P_{SC,0}}{P_{SC,i}})}}$$

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

## Revendications

1. Procédé de pré-distorsion d'un signal optique ($S_{OPT}$), destiné à être transmis sur une ligne de transmission optique (30) et comprenant une pluralité de sous-porteuses optiques multiplexées en fréquence, ledit signal optique étant obtenu à partir de la conversion optique d'un signal électrique ($S_E$) comprenant une pluralité de sous-porteuses électriques multiplexées en fréquences, le procédé comprenant les étapes suivantes :

   obtention (E2) d'une pluralité de facteurs correctifs ($\alpha_{A,i}$), correspondant aux sous-porteuses électriques, en fonction d'une pluralité de valeurs, déterminées pour les sous-porteuses optiques, d'un premier paramètre dépendant de la puissance desdites sous-porteuses optiques; et
   application (E3) des facteurs correctifs sur les amplitudes des sous-porteuses électriques correspondantes, de sorte à égaliser en sortie de ladite ligne de transmission optique (30) les valeurs du premier paramètre pour les sous-porteuses du signal optique.

2. Procédé selon la revendication 1, comprenant en outre une étape de configuration préalable (E1) au cours de laquelle les valeurs du premier paramètre sont mesurées (E12) en sortie de la ligne de transmission optique et les facteurs correctifs sont calculés (E12) en fonction des valeurs mesurées du premier paramètres avant d'être mémorisés (E13).

3. Procédé selon la revendication 1, comprenant en outre une étape de configuration préalable (E1) au cours de laquelle plusieurs ensembles de facteurs correctifs sont mémorisés (E13) en association avec plusieurs configurations possibles de ligne de transmission optique, l'ensemble de facteurs correctifs à appliquer étant obtenu en récupérant, parmi les ensembles mémorisés, un ensemble associé à une configuration correspondant à la configuration de la ligne de transmission optique (30).

4. Procédé selon l'une des revendications 1 à 3, dans lequel le premier paramètre est le rapport signal à bruit ($SNR_i$) d'une sous-porteuse optique.

5. Procédé selon la revendication 4, dans lequel le facteur correctif $\alpha_{A,i}$ correspondant à la i-ème sous-porteuse du signal électrique est calculé de la façon suivante :

$$\alpha_{A,i} = \sqrt{\frac{1}{SNR_i} \cdot \frac{N}{\sum_{i=1}^{N}(\frac{1}{SNR_i})}}$$

où $SNR_i$ est le rapport signal à bruit de la i-ème sous-porteuse optique en sortie de la ligne de transmission optique et N est le nombre de sous-porteuses du signal optique.

6. Procédé selon l'une des revendications 1 à 5, dans lequel le premier paramètre est la puissance d'une sous-porteuse optique.

**7.** Procédé selon la revendication 6, dans lequel le facteur correctif $\alpha_{A,i}$ correspondant à la i-ème sous-porteuse du signal électrique est calculé de la façon suivante :

$$\alpha_{A,i} = \sqrt{\frac{P_{SC,0}}{P_{SC,i}} \cdot \frac{N}{\sum_{i=1}^{N}\left(\frac{P_{SC,0}}{P_{SC,i}}\right)}}$$

où $P_{SC,0}$ est la puissance en sortie de la ligne de transmission optique d'une sous-porteuse de référence parmi les sous-porteuses du signal optique, $P_{SC,i}$ est la puissance en sortie de la ligne de transmission optique de la i-ème sous-porteuse du signal optique et N est le nombre de sous-porteuses du signal optique.

**8.** Dispositif de pré-distorsion (11) d'un signal électrique ($S_E$) comprenant une pluralité de sous-porteuses multiplexées en fréquences, destiné à être converti en un signal optique ($S_{OPT}$) transmis sur une ligne de transmission optique (30) et comprenant une pluralité de sous-porteuses optiques multiplexées en fréquence, ledit dispositif comprenant des moyens de traitement (12) configurés pour :

obtenir une pluralité de facteurs correctifs ($\alpha_{A,i}$), correspondant aux sous-porteuses électriques, en fonction d'une pluralité de valeurs, déterminées pour les sous-porteuses optiques, d'un premier paramètre dépendant de la puissance desdites sous-porteuses optiques; et
appliquer les facteurs correctifs sur les amplitudes des sous-porteuses électriques correspondantes, de sorte à égaliser en sortie de ladite ligne de transmission optique (30) les valeurs du premier paramètre pour les sous-porteuses du signal optique.

**9.** Dispositif selon la revendication 8, comprenant en outre des moyens de mémorisation (14) aptes à stocker au moins un ensemble de facteurs correctifs, les moyens de traitement (12) étant agencés pour accéder aux moyens de mémorisation afin de récupérer les facteurs correctifs à appliquer sur les amplitudes respectives des sous-porteuses du signal électrique.

**10.** Emetteur optique (10) pour l'émission sur une ligne de transmission optique (30) d'un signal optique ($S_{opt}$) comprenant une pluralité de sous-porteuses optiques multiplexées en fréquence, l'émetteur comprenant un dispositif de pré-distorsion (11) selon l'une des revendications 8 ou 9, et des moyens de conversion optique (15) agencés pour convertir un signal électrique comprenant une pluralité de sous-porteuses électriques multiplexées en fréquences, généré par le dispositif de pré-distorsion, en un signal optique comprenant une pluralité de sous-porteuses optiques multiplexées en fréquence.

**11.** Système de transmission optique comprenant :

au moins un émetteur optique (10) selon la revendication 10, apte à émettre un signal optique comprenant une pluralité de sous-porteuses optiques multiplexées en fréquence ;
une ligne de transmission optique (30) dont l'entrée est connectée à la sortie dudit au moins un émetteur optique, ladite ligne de transmission optique comprenant au moins un dispositif optique présentant une fonction de transfert spectrale susceptible d'affecter le spectre dudit signal optique ; et
au moins un récepteur optique (50) dont l'entrée est connectée à la sortie de la ligne de transmission optique.

**12.** Programme d'ordinateur comportant des instructions de code pour l'exécution des étapes du procédé de pré-distorsion selon l'une des revendications 1 à 7 lorsque ce programme est exécuté par un processeur.

**13.** Support d'enregistrement lisible par un ordinateur sur lequel est enregistré un programme d'ordinateur comprenant des instructions pour l'exécution des étapes du procédé de pré-distorsion selon l'une quelconque des revendications 1 à 7.

**Patentansprüche**

**1.** Verfahren zur Vorverzerrung eines optischen Signals ($S_{OPT}$), das dazu bestimmt ist, auf einer optischen Übertragungsleitung (30) übertragen zu werden, und mehrere frequenzgemultiplexte optische Hilfsträger umfasst, wobei das optische Signal aus der optischen Konversion eines elektrischen Signals ($S_E$) erhalten wird, das mehrere frequenzgemultiplexte elektrische Hilfsträger umfasst, wobei das Verfahren die folgenden Schritte umfasst:

Gewinnung (E2) mehrerer Korrekturfaktoren ($\alpha_{A,i}$), die den elektrischen Hilfsträgern entsprechen, in Abhängigkeit von mehreren für die optischen Hilfsträger bestimmten Werten eines ersten Parameters, der von der Leistung der optischen Hilfsträger abhängt; und
Anwendung (E3) der Korrekturfaktoren auf die Amplituden der entsprechenden elektrischen Hilfsträger, um am Ausgang der optischen Übertragungsleitung (30) die Werte des ersten Parameters für die Hilfsträger des optischen Signals anzugleichen.

2. Verfahren nach Anspruch 1, welches außerdem einen Schritt der vorhergehenden Konfiguration (E1) umfasst, in welchem die Werte des ersten Parameters am Ausgang der optischen Übertragungsleitung gemessen werden (E12) und die Korrekturfaktoren in Abhängigkeit von den gemessenen Werten des ersten Parameters berechnet werden (E12), bevor sie gespeichert werden (E13).

3. Verfahren nach Anspruch 1, welches außerdem einen Schritt der vorhergehenden Konfiguration (E1) umfasst, in welchem mehrere Mengen von Korrekturfaktoren in Zuordnung mit mehreren möglichen Konfigurationen der optischen Übertragungsleitung gespeichert werden (E13), wobei die anzuwendende Menge von Korrekturfaktoren erhalten wird, indem aus den gespeicherten Mengen eine Menge abgerufen wird, die einer Konfiguration zugeordnet ist, welche der Konfiguration der optischen Übertragungsleitung (30) entspricht.

4. Verfahren nach einem der Ansprüche 1 bis 3, wobei der erste Parameter das Signal-Rausch-Verhältnis ($SNR_i$) eines optischen Hilfsträgers ist.

5. Verfahren nach Anspruch 4, wobei der Korrekturfaktor $\alpha_{A,i}$, der dem i-ten Hilfsträger des elektrischen Signals entspricht, wie folgt berechnet wird:

$$\alpha_{A,i} = \sqrt{\frac{1}{SNR_i} \cdot \frac{N}{\sum_{i=1}^{N}\left(\frac{1}{SNR_i}\right)}}$$

wobei $SNR_i$ das Signal-Rausch-Verhältnis des i-ten optischen Hilfsträgers am Ausgang der optischen Übertragungsleitung ist und N die Anzahl der Hilfsträger des optischen Signals ist.

6. Verfahren nach einem der Ansprüche 1 bis 5, wobei der erste Parameter die Leistung eines optischen Hilfsträgers ist.

7. Verfahren nach Anspruch 6, wobei der Korrekturfaktor $\alpha_{A,i}$, der dem i-ten Hilfsträger des elektrischen Signals entspricht, wie folgt berechnet wird:

$$\alpha_{A,i} = \sqrt{\frac{P_{SC,0}}{P_{SC,i}} \cdot \frac{N}{\sum_{i=1}^{N}\left(\frac{P_{SC,0}}{P_{SC,i}}\right)}}$$

wobei $P_{SC,0}$ die Leistung am Ausgang der optischen Übertragungsleitung eines Referenz-Hilfsträgers unter den Hilfsträgern des optischen Signals ist, $P_{SC,i}$ die Leistung am Ausgang der optischen Übertragungsleitung des i-ten Hilfsträgers des optischen Signals ist und N die Anzahl der Hilfsträger des optischen Signals ist.

8. Vorrichtung zur Vorverzerrung (11) eines elektrischen Signals ($S_E$), das mehrere frequenzgemultiplexte Hilfsträger umfasst und dazu bestimmt ist, in ein optisches Signal ($S_{OPT}$) konvertiert zu werden, das auf einer optischen Übertragungsleitung (30) übertragen wird und mehrere frequenzgemultiplexte optische Hilfsträger umfasst, wobei die Vorrichtung Verarbeitungsmittel (12) umfasst, die ausgelegt sind zum:

Gewinnen mehrerer Korrekturfaktoren ($\alpha_{A,i}$), die den elektrischen Hilfsträgern entsprechen, in Abhängigkeit von mehreren für die optischen Hilfsträger bestimmten Werten eines ersten Parameters, der von der Leistung der optischen Hilfsträger abhängt; und

Anwenden der Korrekturfaktoren auf die Amplituden der entsprechenden elektrischen Hilfsträger, um am Ausgang der optischen Übertragungsleitung (30) die Werte des ersten Parameters für die Hilfsträger des optischen Signals anzugleichen.

9. Vorrichtung nach Anspruch 8, welche außerdem Speicherungsmittel (14) umfasst, die geeignet sind, wenigstens eine Menge von Korrekturfaktoren zu speichern, wobei die Verarbeitungsmittel (12) dazu eingerichtet sind, auf die Speicherungsmittel zuzugreifen, um die Korrekturfaktoren abzurufen, die auf die jeweiligen Amplituden der Hilfsträger des elektrischen Signals anzuwenden sind.

10. Optischer Sender (10) zum Senden, auf einer optischen Übertragungsleitung (30), eines optischen Signals ($S_{OPT}$), das mehrere frequenzgemultiplexte optische Hilfsträger umfasst, wobei der Sender eine Vorrichtung zur Vorverzerrung (11) nach einem der Ansprüche 8 oder 9 umfasst, sowie Mittel zur optischen Konversion (15), die dazu eingerichtet sind, ein mehrere frequenzgemultiplexte elektrische Hilfsträger umfassendes elektrisches Signal, das von der Vorrichtung zur Vorverzerrung erzeugt wurde, in ein optisches Signal zu konvertieren, das mehrere frequenzgemultiplexte optische Hilfsträger umfasst.

11. Optisches Übertragungssystem, welches umfasst:

wenigstens einen optischen Sender (10) nach Anspruch 10, der geeignet ist, ein optisches Signal zu senden, das mehrere frequenzgemultiplexte optische Hilfsträger umfasst;
eine optische Übertragungsleitung (30), deren Eingang mit dem Ausgang des wenigstens einen optischen Senders verbunden ist, wobei die optische Übertragungsleitung wenigstens eine optische Vorrichtung umfasst, die eine spektrale Übertragungsfunktion aufweist, die das Spektrum des optischen Signals beeinflussen kann; und
wenigstens einen optischen Empfänger (50), dessen Eingang mit dem Ausgang der optischen Übertragungsleitung verbunden ist.

12. Computerprogramm, welches Codeanweisungen zur Ausführung der Schritte des Verfahrens zur Vorverzerrung nach einem der Ansprüche 1 bis 7, wenn dieses Programm von einem Prozessor ausgeführt wird, umfasst.

13. Computerlesbares Aufzeichnungsmedium, auf welchem ein Computerprogramm aufgezeichnet ist, das Anweisungen zur Ausführung der Schritte des Verfahrens zur Vorverzerrung nach einem der Ansprüche 1 bis 7 umfasst.

**Claims**

1. Method for pre-distorting an optical signal ($S_{OPT}$), intended to be transmitted over an optical transmission line (30) and comprising a plurality of frequency division multiplexed optical sub-carriers, said optical signal being obtained from the optical conversion of an electrical signal ($S_E$) comprising a plurality of frequency division multiplexed electrical sub-carriers, the method comprising the following steps:

obtaining (E2) a plurality of corrective factors ($\alpha_{A,i}$) corresponding to the electrical sub-carriers, as a function of a plurality of values, determined for the optical sub-carriers, of a first parameter dependent on the power of said optical sub-carriers; and
applying (E3) the corrective factors to the amplitudes of the corresponding electrical sub-carriers, so as to equalize, at the output of said optical transmission line (30), the values of the first parameter for the sub-carriers of the optical signal.

2. Method according to Claim 1, further comprising a preliminary configuration step (E1) during which the values of the first parameter are measured (E12) at the output of the optical transmission line and the corrective factors are calculated (E12) as a function of the measured values of the first parameter before being stored (E13).

3. Method according to Claim 1, further comprising a preliminary configuration step (E1) during which several sets of corrective factors are stored (E13) in association with several possible optical transmission line configurations, the set of corrective factors to be applied being obtained by recovering, from among the stored sets, a set associated with a configuration corresponding to the configuration of the optical transmission line (30).

4. Method according to one of Claims 1 to 3, in which the first parameter is the signal-to-noise ratio (SNR$_i$) of an optical sub-carrier.

5. Method according to Claim 4, in which the corrective factor $\alpha_{A,i}$ corresponding to the ith sub-carrier of the electrical signal is calculated as follows:

$$\alpha_{A,i} = \sqrt{\frac{1}{SNR_i} \cdot \frac{N}{\sum_{i=1}^{N}\left(\frac{1}{SNR_i}\right)}}$$

in which SNR$_i$ is the signal-to-noise ratio of the ith optical sub-carrier at the output of the optical transmission line and N is the number of sub-carriers of the optical signal.

6. Method according to one of Claims 1 to 5, in which the first parameter is the power of an optical sub-carrier.

7. Method according to Claim 6, in which the corrective factor $\alpha_{A,i}$ corresponding to the ith sub-carrier of the electrical signal is calculated as follows:

$$\alpha_{A,i} = \sqrt{\frac{P_{SC,0}}{P_{SC,i}} \cdot \frac{N}{\sum_{i=1}^{N}\left(\frac{P_{SC,0}}{P_{SC,i}}\right)}}$$

in which P$_{SC,0}$ is the power at the output of the optical transmission line of a reference sub-carrier from among the sub-carriers of the optical signal, P$_{SC,i}$ is the power at the output of the optical transmission line of the ith sub-carrier of the optical signal and N is the number of sub-carriers of the optical signal.

8. Device for pre-distorting (11) an electrical signal (S$_E$) comprising a plurality of frequency division multiplexed sub-carriers, intended to be converted into an optical signal (S$_{OPT}$) transmitted over an optical transmission line (30) and comprising a plurality of frequency division multiplexed optical sub-carriers, said device comprising processing means (12) configured to:

obtain a plurality of corrective factors ($\alpha_{A,i}$). corresponding to the electrical sub-carriers, as a function of a plurality of values, determined for the optical sub-carriers, of a first parameter dependent on the power of said optical sub-carriers; and
apply the corrective factors to the amplitudes of the corresponding electrical sub-carriers, so as to equalize, at the output of said optical transmission line (30), the values of the first parameter for the sub-carriers of the optical signal.

9. Device according to Claim 8, further comprising storage means (14) suitable for storing at least one set of corrective factors, the processing means (12) being arranged to access the storage means in order to recover the corrective factors to be applied to the respective amplitudes of the sub-carriers of the electrical signal.

10. Optical transmitter (10) for transmitting, over an optical transmission line (30), an optical signal (S$_{opt}$) comprising a plurality of frequency division multiplexed optical sub-carriers, the transmitter comprising a pre-distortion device (11) according to either of Claims 8 and 9, and optical conversion means (15) arranged to convert an electrical signal comprising a plurality of frequency division multiplexed electrical sub-carriers, generated by the pre-distortion device, into an optical signal comprising a plurality of frequency division multiplexed optical sub-carriers.

11. Optical transmission system comprising:

at least one optical transmitter (10) according to Claim 10, suitable for transmitting an optical signal comprising a plurality of frequency division multiplexed optical sub-carriers;
an optical transmission line (30), the input of which is connected to the output of said at least one optical transmitter, said optical transmission line comprising at least one optical device that has a spectral transfer function likely to affect the spectrum of said optical signal; and
at least one optical receiver (50), the input of which is connected to the output of the optical transmission line.

12. Computer program comprising code instructions for the execution of the steps of the pre-distortion method according to one of Claims 1 to 7 when this program is run by a processor.

13. Computer-readable storage medium on which is stored a computer program comprising instructions for the execution of the steps of the pre-distortion method according to any one of Claims 1 to 7.

Fig. 1A

Fig. 1B

Fig. 2

**Fig. 3**

**Fig. 4**

E11 — MES $SNR_1, \ldots, SNR_i, \ldots, SNR_N$

E12 — $SNR_1, \ldots, SNR_i, \ldots, SNR_N \rightarrow \alpha_{A,1}, \ldots, \alpha_{A,1}, \ldots, \alpha_{A,N}$

E13 — MEM $(\alpha_{A,1}, \ldots, \alpha_{A,1}, \ldots, \alpha_{A,N})$

E1

OBT $\alpha_{A,1}, \ldots, \alpha_{A,1}, \ldots, \alpha_{A,N}$ — E2

APP $(\alpha_{A,1}, \ldots, \alpha_{A,1}, \ldots, \alpha_{A,N}) \rightarrow S_E$ — E3

$S_E \rightarrow S_{OPT}$ — E4

## RÉFÉRENCES CITÉES DANS LA DESCRIPTION

**Documents brevets cités dans la description**

- US 20070206954 A, Fishman
- US 2010046958 A, Awadalla Ahmed
- US 20120141134 A, Hauske
- FR 2906660 A1

**Littérature non-brevet citée dans la description**

- **SUGIHARA et al.** 43 Gb/s DQPSK Pre-equalization employing 6-bit, 43GS/s DAC Integrated LSI for Cascaded ROADM Filtering. *OFC/NFOEC,* 21 Mars 2010
- **UTO et al.** An Expérimental Study of Nonlinear Effects on 43 Gb/s Electronic Pre-equalized Transmission. *OFC/NFOEC,* 17 Mars 2013